# FASCICULE DE BREVET EUROPEEN

(11) **EP 0 802 085 B1**
(45) Date de publication et mention de la délivrance du brevet: **17.05.2000**
(21) Numéro de dépôt: 97104807.9
(22) Date de dépôt: 20.03.1997
(51) Int. Cl.: B60R 16/02

(54) **Ensemble de commande d'actionneurs installés dans un véhicule automobile**
Steuereinrichtung für in einem Kraftfahrzeug installierte Stellglieder
Control device for actuators installed in a vehicle

(30) Priorité: 15.04.1996 FR 9604673
(43) Date de publication de la demande: 22.10.1997
(73) Titulaire: SIEMENS AUTOMOTIVE S.A., 31036 Toulouse Cédex (FR)
(72) Inventeur: Jurek, Gilles, 31830 Plaisance-du-Touch (FR)
(74) Mandataire: Zedlitz, Peter, Dipl.-Inf.

(56) Documents cités:
- DE-A- 3 417 161
- DE-A- 3 833 499
- DE-C- 4 227 182
- US-A- 4 482 176

## Description

La présente invention est relative à un ensemble de commande d'actionneurs installés dans un véhicule automobile et, plus particulièrement, à un tel ensemble comprenant une pluralité de circuits électriques incorporant des fusibles de protection et des relais de commande de l'alimentation électrique des actionneurs, enfermés dans un boîtier de protection.

Les véhicules automobiles, notamment ceux propulsés par un moteur à combustion interne, sont couramment équipés d'un tel boîtier. L'ensemble contenu dans celui-ci prend la forme d'une grille métallique de connexion sur laquelle sont enfichés des fusibles de protection et des relais formant partie de divers circuits de commande d'actionneurs de feux, d'essuie-vitres, de ventilateurs, climatiseurs ou autres appareils associés à l'habitacle du véhicule. Certains de ces circuits de commande (essuie-vitres, clignotants, etc...) peuvent être eux-mêmes enfichés sur la grille.

Le document US - A - 4 482 176 montre un tel ensemble de commande d'actionneurs installés dans un véhicule automobile, comprenant une pluralité de circuits électriques incorporant des fusibles de protection et des relais de commande d'alimentation électrique des actionneurs enfermés dans un boîtier de protection monté amoviblement sur un support fixe du véhicule.

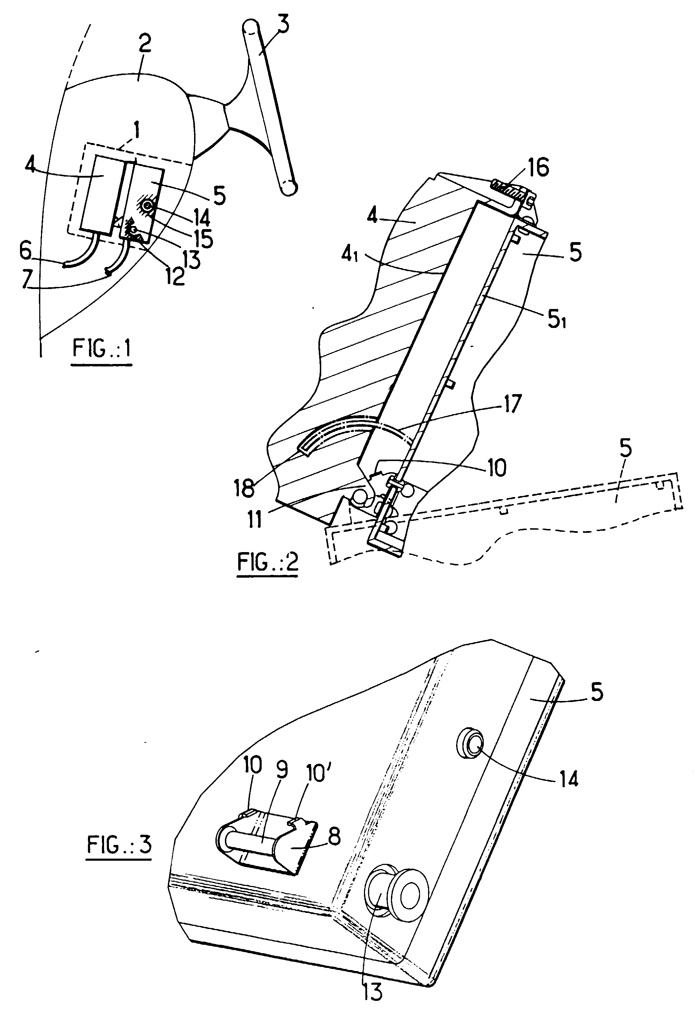

De nouvelles fonctions "intelligentes" sont incorporés aujourd'hui aux fonctions "habitacle" classiques. Ces nouvelles fonctions établissent une coordination automatique du fonctionnement de certains actionneurs telle que, par exemple l'activation automatique de l'essuie-vitre arrière en cas d'enclenchement de la marche arrière du véhicule par temps de pluie. La mise en oeuvre de telles fonctions exige des circuits électroniques sur carte à circuits imprimés incompatibles avec la grille de connexion du boîtier décrit ci-dessus. On éprouve alors des difficultés à intégrer de telles nouvelles fonctions dans l'espace occupé par ce boîtier, couramment constitué (voir figure 1) par un logement 1 prévu dans la planche de bord 2 du véhicule, sous le volant 3 de celui-ci.

La présente invention a précisément pour but de surmonter ces difficultés en proposant un ensemble de commande d'actionneurs équipé de telles fonctions "intelligentes" et conçu pour se substituer sans difficulté à un ensemble de la technique antérieure, à l'emplacement qui lui était alloué dans le véhicule.

On atteint ce but de l'invention, ainsi que d'autres qui apparaîtront à la lecture de la description qui va suivre, avec un ensemble du type décrit en préambule de la présente description, remarquable en ce qu'il comprend un deuxième boîtier protégeant une pluralité de circuits électroniques de gestion du fonctionnement des actionneurs, des premiers moyens pour monter amoviblement le premier boîtier sur le deuxième et des deuxièmes moyens pour monter amoviblement le deuxième boîtier sur un support fixe du véhicule.

En disposant ainsi dans des boîtiers distincts les composants à monter sur grille de connexion et ceux qui exigent des cartes à circuits imprimés, on surmonte le problème d'incompatibilité évoqué ci-dessus. En montant le deuxième boîtier sur le premier, on forme un bloc qui se substitue simplement, au montage, à un ensemble antérieur et qui peut se fixer, comme ce dernier, dans le logement qui lui était alloué.

Suivant un mode de réalisation préféré de l'ensemble selon l'invention, le moyen de montage du premier boîtier sur le deuxième comprend une articulation démontable dans une position relative prédéterminée des deux boîtiers et indémontable dans les autres. Comme on le verra dans la suite, cette disposition facilite le remontage du deuxième boîtier sur le premier.

D'autres caractéristiques et avantages de la présente invention apparaîtront à la lecture de la description qui va suivre et à l'examen du dessin annexé dans lequel :
- la figure 1 est une vue schématique d'un ensemble suivant l'invention, installé sur la planche de bord d'un véhicule automobile,
- la figure 2 est une vue partielle agrandie des moyens de montage du premier boîtier sur le deuxième, et
- la figure 3 est une vue de détail agrandie des moyens de montage du deuxième boîtier sur la planche de bord et d'une partie des moyens de montage du premier boîtier sur le deuxième.

On se réfère à la figure 1 du dessin annexé où il apparaît que l'ensemble suivant l'invention comprend des premier et deuxième boîtiers 4 et 5, respectivement, installés dans le logement 1 de la planche de bord 2, en lieu et place d'un boîtier "de connexion" de la technique antérieure.

Le boîtier 4, le plus profondément enfoncé dans le logement 1, protège essentiellement une grille de connexion métallique classique qui porte des fusibles de protection et des relais enfichés sur la grille et formant partie de circuits de commande d'actionneurs d'appareils installés dans un véhicule automobile (essuie-vitres, feux divers, ventilateur, climatiseur, etc...). Tous ces organes ou appareils sont classiques et ne sont donc pas représentés au dessin. Un toron 6 de fils électriques sort du boîtier 4, ces fils raccordant les fusibles et relais contenus dans le boîtier aux circuits électriques qui les incorporent.

Suivant l'invention, le boîtier 5 est monté sur un support fixe prévu dans le logement 1 pour recevoir la boîte de connexion auquel l'ensemble de boîtiers selon l'invention se substitue. Le boîtier 4 est lui-même monté sur le boîtier 5 par des moyens représentés en plus de détails à la figure 2.

Le boîtier 5 protège essentiellement des circuits électroniques montés sur cartes à circuits imprimés et notamment des circuits de gestion de fonctionnement de certains actionneurs, pour en coordonner l'activation de manière "intelligente", comme on l'a vu en préambule de la présente description avec l'exemple de l'enclenchement automatique de l'essuie-vitre arrière en cas d'enclenchement de la marche arrière sous la pluie, situation connue du circuit de gestion associé par la détection du fonctionnement de l'essuie-vitre avant, au moment du passage en marche arrière. De nombreuses autres fonctions peuvent être exécutées par les circuits sur carte du boîtier 5, telles que le déclenchement d'une alarme (sirène, clignotant) après détection d'une intrusion ou tentative d'intrusion, la gestion des temporisations des essuie-vitres ou de moyens de dégivrage, etc...

Tout comme pour le boîtier 4, un toron de fils 7 sort du boîtier 5 pour raccorder les circuits sur carte contenus dans ce boîtier aux actionneurs et capteurs associés à ce circuit.

On se réfère aux figures 2 et 3 du dessin annexé pour décrire en plus de détails les moyens de montage du boîtier 4 sur le boîtier 5. Ces moyens comprennent essentiellement une articulation démontable matérialisée par deux chapes portant chacune un axe, ces deux chapes étant fixées sur une face 5₁ du boîtier 5 conçue pour venir en regard d'une face 4₁ du boîtier 4. L'une (8) des deux chapes est visible à la figure 3. Elles sont disposées près de deux bords opposés de la face 5₁ du boîtier 5, de manière qu'un axe d'articulation 9 porté par la chape 8 soit aligné avec l'axe porté par l'autre chape. Des pattes 10, 10' sont découpées et formées sur la chape 8 de manière à déborder l'une vers l'autre pour un but que l'on expliquera plus loin.

Deux paliers, dont l'un (11) est visible sur la figure 2, débordent de la face 4₁ du boîtier 4. Ils sont conformés pour s'adapter aux axes des chapes, en autorisant la rotation du boîtier 5 autour de ces axes après mise en prise des paliers et des axes.

Suivant l'invention, cette mise en prise n'est possible que lorsque le boîtier 5 occupe une position prédéterminée, représentée en trait interrompu à la figure 2. Dans cette position, en effet, il est possible d'engager l'axe 9 dans le palier 11 sans être gêner par les pattes 10, 10'. Si on relève ensuite le boîtier 5 pour le rapprocher du boîtier 4, les pattes 10, 10' empêchent le palier 9 de se séparer de l'axe 10, et donc les deux boîtiers de se détacher l'un de l'autre. On verra plus loin l'intérêt de cette disposition.

On se réfère maintenant à la figure 3 où l'on a représenté en détail certains des moyens qui permettent le montage du boîtier 5 sur un support fixe prévu dans le logement 1. Ce support fixe, conçu pour recevoir une boîte de connexion de la technique antérieure, est constitué par une paire de paliers alignés tels que celui schématisé en 12 sur la figure 1, ces paliers, formés dans la planche de bord, recevant chacun un axe tel que celui référencé 13 sur la figure 3, ces axes débordant de deux parois latérales opposées du boîtier 5. Le boîtier 5 peut donc tourner autour de ces axes, colinéaires, jusqu'à ce qu'une protubérance 14 débordant du boîtier 5, pénètre dans un trou 15 (voir figure 1) percé dans une pièce élastique (non représentée) solidaire de la planche de bord pour fixer la position de ce boîtier.

L'ensemble de boîtiers suivant l'invention est alors utilisé comme suit. Pour le montage de cet ensemble sur un véhicule, on présente sur la chaîne de montage les deux boîtiers fixés l'un à l'autre. Pour ce faire, les pattes telles que 11 du boîtier 4 sont préalablement montées sur les axes tels que 9 du boîtier 5 dans la position prédéterminée représentée en trait interrompu à la figure 2. Le boîtier 5 est alors appliqué contre le boîtier 4 (position repérée en trait plein) et fixé sur celui-ci à l'aide d'une vis 16 ou par tout autre moyen de fixation équivalent. L'ensemble est ensuite inséré d'un bloc dans le logement 1 par engagement des organes 12, 13 puis des organes 14, 15.

Les deux boîtiers, après installation, doivent rester accessibles pour que l'on puisse intervenir sur leur contenu en cas de panne ou dans le cadre d'opérations d'entretien et de surveillance.

Pour visiter le boîtier 4 en vue, par exemple, du changement d'un fusible d'un relais défaillant, il faut alors d'abord retirer le boîtier 5. On fait tourner le boîtier 5 sur les paliers 12, on retire la vis 16 et on fait basculer le boîtier 5 jusqu'à la position représentée en trait interrompu à la figure 2 pour dégager les axes tels que 9 des paliers tels que 11 et ainsi séparer les boîtiers 4 et 5. Le boîtier 4 devient donc accessible pour une intervention sur celui-ci. Il en est de même, évidemment, du boîtier 5.

Pour réassembler, après intervention, les boîtiers 4 et 5, on replace ce dernier dans la position repérée en trait interrompu à la figure 2 et sur les paliers 12, et on le relève contre le boîtier 4 pour remettre la vis de fixation 16 en place. Pendant ce relèvement, la force élastique appliquée par le toron 6 de fils sur le boîtier 4 pourrait empêcher le maintien du couplage entre l'axe 9 et le palier 11. Suivant l'invention, un tel découplage est empêché par les pattes 10, 10' qui s'opposent à ce découplage dès que le boîtier 5 a quitté la position représentée en trait interrompu à la figure 2.

Ces pattes facilitent ainsi avantageusement l'assemblage des deux boîtiers, dans un logement 1 étroit et dont le fond est inaccessible de l'extérieur pour l'utilisateur quand les boîtiers 4 et 5 sont engagés dans ce logement.

Il apparaît maintenant que l'invention permet bien d'atteindre les buts fixés à savoir l'installation, en lieu et place d'une boîte de connexion de la technique antérieure, d'un ensemble de deux boîtiers rassemblant l'un des composants à montage sur grille de connexion, l'autre des composants à montage sur circuit imprimé, le montage et le démontage de ces boîtiers restant commodes. Notons encore que le boîtier 4, supporté par le boîtier 5 solidement fixé dans le logement 1, se trouve lui-même solidement fixé.

Bien entendu, l'invention n'est pas limitée au mode de réalisation décrit et représenté qui n'a été donné qu'à titre d'exemple. C'est ainsi que les positions relatives des paliers et des axes sur les deux boîtiers pourraient être inversées sans que l'on sorte pour autant du domaine de la présente invention. De même, on pourrait remplacer les pattes 10, 10' par des doigts incurvés 17 (représentés en trait mixte à la figure 2) solidaires du boîtier 5 et coopérant avec des encoches également incurvées 18 formées dans le boîtier 4, pour empêcher la séparation des boîtiers 4 et 5.

## Revendications

1. Ensemble de commande d'actionneurs installés dans un véhicule automobile, comprenant une pluralité de circuits électriques incorporant des fusibles de protection et des relais de commande d'alimentation électrique des actionneurs enfermés dans un boîtier de protection (4), caractérisé en ce qu'il comprend un deuxième boîtier (5) protégeant une pluralité de circuits électroniques de gestion du fonctionnement desdits actionneurs, des premiers moyens (9, 11) pour monter amoviblement le premier boîtier (4) sur le deuxième (5) et des deuxièmes moyens (13, 14, 15) pour monter amoviblement le deuxième boîtier (5) sur un support fixe (1) du véhicule.

2. Ensemble conforme à la revendication 1, caractérisé en ce que lesdits premiers moyens de montage du premier boîtier (4) sur le deuxième (5) comprennent une articulation (9, 11) démontable dans une position relative prédéterminée des deux boîtiers et indémontable dans les autres.

3. Ensemble conforme à la revendication 2, caractérisé en ce que ladite articulation (9, 11) comprend au moins un axe (9) solidaire de l'un des deux boîtiers et un palier (11) solidaire de l'autre boîtier, cet axe (9) et ce palier (11) pouvant être mis en prise dans ladite position relative prédéterminée des boîtiers.

4. Ensemble conforme à la revendication 2, caractérisé en ce qu'il comprend au moins une patte (10, 10') ou doigt (17) solidaire de l'axe (9) et agencé pour empêcher la séparation dudit axe (9) et dudit palier (11), après leur mise en prise, dans des positions relatives des boîtiers écartées de ladite position prédéterminée.

5. Ensemble conforme à l'une quelconque des revendications 1 à 4, caractérisé en ce qu'il comprend des moyens (16) pour fixer les deux boîtiers (4, 5) l'un sur l'autre, dans une position relative fixe écartée de ladite position prédéterminée, l'axe (9) et le palier (11) étant en prise.

6. Ensemble conforme à l'une quelconque des revendications 1 à 5, caractérisé en ce que les deuxièmes moyens de montage amovibles comprennent au moins un couple palier (12)/axe (13) monté entre le deuxième boîtier (5) et le support fixe (1) et des moyens (14, 15) pour bloquer le deuxième boîtier (5) dans ce support (1) après engagement du palier (12) et de l'axe (13).

7. Ensemble conforme à l'une quelconque des revendications 1 à 6, caractérisé en ce que le support fixe (1) est incorporé à la planche de bord (2) du véhicule.

## Patentansprüche

1. Steuereinrichtung für in einem Kraftfahrzeug installierte Stellglieder, mit mehreren elektrischen Schaltungen, die Sicherungen und Steuerrelais zur elektrischen Versorgung der Stellglieder enthalten, die in einem Schutzgehäuse (4) eingeschlossen sind, dadurch gekennzeichnet, daß sie aufweist: ein zweites Gehäuse (5), das mehrere elektronische Schaltungen zur Überwachung der Funktionsweise der Stellglieder schützt, erste Mittel (9, 11) zum beweglichen Anbringen des ersten Gehäuses (4) an dem zweiten Gehäuse (5) und zweite Mittel (13, 14, 15) zum beweglichen Anbringen des zweiten Gehäuses (5) an einer ortsfesten Abstützung (1) des Fahrzeuges.

2. Einrichtung nach Anspruch 1, dadurch gekennzeichnet, daß die ersten Mittel zum Anbringen des ersten Gehäuses (4) an dem zweiten Gehäuse (5) ein Gelenk (9, 11) aufweisen, das in einer vorgegebenen relativen Lage der beiden Gehäuse lösbar und in den anderen unlösbar ist.

3. Einrichtung nach Anspruch 2, dadurch gekennzeichnet, daß das Gelenk (9, 11) mindestens eine Achse (9), die mit einem der beiden Gehäuse fest verbunden ist, und ein mit dem anderen Gehäuse fest verbundenes Lagerteil (11) aufweist, wobei die Achse (9) und das Lagerteil (11) in der vorgegebenen relativen Lage der Gehäuse in Eingriff bringbar sind.

4. Einrichtung nach Anspruch 2, dadurch gekennzeichnet, daß sie mindestens eine Klaue (10, 10') oder einen Finger (17) aufweist, die bzw. der mit der Achse (9) fest verbunden und so ausgebildet ist, daß eine Trennung der Achse (9) von dem Lagerteil (11) nach ihrem Eingriff in von der vorgegebenen Lage entfernten relativen Lagen der Gehäuse verhindert wird.

5. Einrichtung nach einem der Ansprüche 1 bis 4, dadurch gekennzeichnet, daß sie Mittel (16) aufweist, die dazu dienen, die beiden Gehäuse (4, 5) in einer zu der vorgegebenen Lage entfernten, festliegenden relativen Lage, in der die Achse (9) und das Lagerteil (11) miteinander in Eingriff sind, festzulegen.

6. Einrichtung nach einem der Ansprüche 1 bis 5, dadurch gekennzeichnet, daß die zweiten Mittel zum beweglichen Anbringen mindestens ein Paar aus einem Lagerteil (12) und einer Achse (13) aufweisen, das zwischen dem zweiten Gehäuse (5) und der ortsfesten Abstützung (1) angeordnet ist, sowie Mittel (14, 15) zum Verriegeln des zweiten Gehäuses (5) in der Abstützung (1), nachdem das Lagerteil (12) und die Achse (13) miteinander in Eingriff sind.

7. Einrichtung nach einem der Ansprüche 1 bis 6, dadurch gekennzeichnet, daß die ortsfeste Abstützung (1) in der Instrumententafel (2) des Fahrzeuges vorgesehen ist.

## Claims

1. Control unit for actuators installed in a motor vehicle comprising a plurality of electrical circuits incorporating security fuses and relays for controlling the supply of electricity to the actuators contained in a protective box (4), characterised in that it comprises a second box (5) protecting a plurality of electronic circuits managing operation of said actuators, first means (9, 11) for detachably mounting the first box (4) on the second (5) and second means (13, 14, 15) for detachably mounting the second box (5) on a fixed support (1) of the vehicle.

2. Unit according to claim 1, characterised in that said first means for mounting the first box (4) on the second (5) comprise an articulation (9, 11) which is removable in a predetermined relative position of the two boxes and non-removable in the others.

3. Unit according to claim 2, characterised in that said articulation (9, 11) comprises at least one pin (9) integral with one of the two boxes and a bearing (11) integral with the other box, this pin (9) and this bearing (11) being adapted to engage in said predetermined relative position of the boxes.

4. Unit according to claim 2, characterised in that it comprises at least one tab (10, 10') or finger (17) integral with the pin (9) and arranged so as to prevent separation of said pin (9) and said bearing (11) after the engagement thereof in relative positions of the boxes spaced from said predetermined position.

5. Unit according to any one of claims 1 to 4, characterised in that it comprises means (16) for fixing the two boxes (4, 5) on one another in a fixed relative position spaced from said predetermined position, the pin (9) engaging in the bearing (11).

6. Unit according to any one of claims 1 to 5, characterised in that the second detachable mounting means comprise at least one pair comprising bearing (12) and pin (13) mounted between the second box (5) and the fixed support (1) and means (14, 15) for locking the second box (5) in this support (1) after engagement of the bearing (12) and the pin (13).

7. Unit according to any one of claims 1 to 6, characterised in that the fixed support (1) is incorporated in the instrument panel (2) of the vehicle.
